(19) Europäisches Patentamt / European Patent Office / Office européen des brevets

(11) **EP 2 692 544 B1**

(12) **EUROPEAN PATENT SPECIFICATION**

(45) Date of publication and mention
of the grant of the patent:
**23.03.2016 Bulletin 2016/12**

(21) Application number: **12763671.0**

(22) Date of filing: **23.03.2012**

(51) Int Cl.:
*B60C 1/00* *(2006.01)*  *B60C 13/04* *(2006.01)*
*B60C 13/00* *(2006.01)*  *B60C 11/02* *(2006.01)*
*C08K 3/04* *(2006.01)*  *C08L 7/00* *(2006.01)*
*C08L 9/00* *(2006.01)*

(86) International application number:
**PCT/JP2012/057641**

(87) International publication number:
**WO 2012/133248 (04.10.2012 Gazette 2012/40)**

(54) **TIRE CASING**

**REIFENÜBERZUG**

**ENVELOPPE DE PNEU**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.03.2011 JP 2011070577**

(43) Date of publication of application:
**05.02.2014 Bulletin 2014/06**

(73) Proprietor: **Bridgestone Corporation
Tokyo 104-8340 (JP)**

(72) Inventor: **KANOU, Motoaki
Kodaira-shi
Tokyo 187-8531 (JP)**

(74) Representative: **Oxley, Robin John George et al
Marks & Clerk LLP
90 Long Acre
London WC2E 9RA (GB)**

(56) References cited:
**EP-A- 2 165 853      EP-A2- 0 677 375
WO-A1-2009/080091      JP-A- 8 258 179
JP-A- H0 930 215      JP-A- 2006 111 072
JP-A- 2007 331 422      JP-A- 2009 051 481**

**Description**

[Technical Field]

The present invention relates to a tire casing which is suitably used for a two-stage vulcanization process, in particular, to a tire casing which is excellent in external damage resistance in a sidewall part.

[Background Art]

In order to enhance the fuel consumption of automobiles, it has hitherto been demanded to more reduce rolling resistance of a tire. In order to more reduce this rolling resistance of a tire, an improvement of compounding of a rubber composition which is used chiefly for tread members or sidewall members is performed.

For example, Patent Document 1 proposes that a rubber composition obtained by compounding (A) 100 parts by weight of a rubber composed of a natural rubber and/or a polyisoprene rubber and a butadiene rubber prepared by previously blending a low molecular weight butadiene rubber and a high molecular weight butadiene rubber, (B) from 30 to 60 parts by weight in total of from 10 to 40 parts by weight of silica and carbon black, (C) a sulfenamide based vulcanization accelerator, and (D) sulfur, with a compounding ratio of the vulcanization accelerator to sulfur being from 0.5 to 0.7, is used for a sidewall of a pneumatic tire.

Also, Patent Document 2 proposes a rubber composition for sidewall containing 20 parts by mass or more of silica and not more than 5 parts by mass of carbon black with a BET specific surface area of the carbon black being 140 $m^2/g$ or more, based on 100 parts by mass of a rubber component containing a natural rubber component composed of at least either of a natural rubber or an epoxidized natural rubber.

However, it was difficult to make both a reduction of the rolling resistance of a tire (low fuel consumption) and the external damage resistance of a shoulder portion of the sidewall part close to a road surface compatible with each other by one layer of such a sidewall rubber.

On the other hand, Patent Document 3 proposes a pneumatic tire having a double-layer structure in which a sidewall part is different in the rubber quality between an outer layer and an inner layer, wherein the outer layer of the foregoing sidewall part has a durometer hardness (HD) higher by 15 or more and a loss elastic modulus (E") higher by 3 times or more than the inner layer. Though this invention is excellent from the standpoints of imparting the external damage resistance to the outer layer of the sidewall part and imparting the low fuel consumption (reduction of the rolling resistance) to the inner layer, it involved such a problem that when the outer layer is made thick for the purpose of increasing the external damage resistance, the low fuel consumption is deteriorated, whereas when the inner layer is made thick for the purpose of increasing the low fuel consumption, the external damage resistance is deteriorated.

Now, in order to increase unrestrictedness of the manufacturing method of a tire, there are developed a variety of manufacturing methods of a tire by vulcanizing the tire at two stages.

For example, Patent Document 4 proposes a manufacturing method in which a molding and vulcanization step of a tire is divided into two method stages A and B which are independent upon each other; a tire part is assembled in the method stage A so as to provide the maximum one part of at least one carcass layer and tread stripe pieces as an outermost layer in a tire radius direction; subsequently, a vulcanization treatment is applied to a surface and one or large number of strength support materials within a vulcanization mold imparting a predetermined cross-sectional contour; and this tire portion is also subjected to a vulcanization treatment step in the method stage B in the same way to assemble a complete tire. Also, Patent Document 5 proposes a manufacturing method of a tire in which in a method step A, a tire casing that is a partial tire is constituted, and this tire casing is subsequently vulcanized; and in a method step B, the tire casing is added with the entirety or the remaining part of an unvulcanized tread and vulcanized to form a complete tire, and in particular, discloses a manufacturing method of a tire in which the surface of the entirety or the remaining part of the unvulcanized tread is at least subjected to a partial plasma treatment.

Furthermore, Patent Document 6 proposes a manufacturing method of a tire adopting a two-stage vulcanization process for tires of passenger cars and including a primary vulcanization step of integrating a spiral reinforcing layer and a tread with each other and then impressing a tread pattern and a secondary vulcanization step of externally fitting a primary vulcanization material obtained in this primary vulcanization step on an outer periphery of a radial carcass ply of a case side member.

However, these manufacturing methods of a tire of performing the secondary vulcanization step by sticking the tread member to the tire casing having been previously vulcanized in the primary vulcanization step were not a method in which the low fuel consumption of a tire is enhanced (the rolling resistance is reduced), and the external damage resistance, in particular, the external damage resistance of a shoulder portion of a sidewall part close to a road surface is enhanced.

Then, a tire casing to be used for the two-stage vulcanization process, in which not only the low fuel consumption is enhanced, but the external damage resistance of a shoulder portion of a sidewall part close to a road surface is enhanced, is demanded.

JP2007331422 seeks to provide a pneumatic radial tire having improved run-flat durability without degrading ride comfort, low fuel consumption, and crack and cut resistance on the surface layers of side wall portions. JPH08258179 seeks to optimize the characteristics of various tires between manufacturing processes by performing assembling. JP2006111072 seeks to provide a pneumatic radial tire allowing attaining of enough reduction of the weight without impairing various properties of the tire.

[Prior Art Documents]

[Patent Documents]

   [Patent Document 1] JP-A-2005-350595
   [Patent Document 2] JP-A-2008-291084
   [Patent Document 3] JP-A-2009-119994
   [Patent Document 4] JP-A-08-258179
   [Patent Document 5] JP-A-2000-79640
   [Patent Document 6] JP-A-2006-111072

[Summary of the Invention]

[Problems to be solved by the Invention]

The present inventor has had knowledge that in manufacturing a tire, though a tire casing member can be uniformly vulcanized by means of two-stage vulcanization, and a tire having excellent crack durability and low fuel consumption can be provided, in view of a characteristic feature of a vulcanization production method of vulcanizing only a tire casing, the resulting tire has a short length of a tread extending to a sidewall and is inferior in the external damage resistance, as compared with tires fabricated by a conventional production method of simultaneously vulcanizing a tread and a tire casing. However, the sidewall is a member which affects the low fuel consumption performance, and it is preferable that the sidewall has high low heat generation properties (low tan $\delta$).

Then, an object of the present invention is to provide a tire casing capable of not only enhancing low fuel consumption but enhancing external damage resistance of a shoulder portion of a sidewall part close to a road surface.

[Means for Solving the Problems]

In order to solve the foregoing problems, the present inventor made extensive and intensive investigations for the purpose of making both the low heat generation properties and the external damage resistance compatible with each other. As a result, the present inventor paid attention to disposition of a rubber member having properties as in the present invention. That is, it has been found that the problems of the present invention can be solved by a manufacturing method of a tire of allowing a vulcanized tire casing and a tread member to adhere to each other and achieving integral vulcanization molding, in which a specified side rubber is arranged in a sidewall part of the tire casing in a specified range, leading to accomplishment of the present invention.

The present invention is concerned with:

   [1] A tire casing comprising a sidewall part, a bead part, a carcass ply, and a belt part and having been previously vulcanized prior to sticking a tread member, wherein when a distance from an end part of the tread member joint surface to an end part of the bottom surface of the bead part along the surface of the sidewall part is defined to be 1, the tire casing has a side rubber member (A) extending in a proportion of from 0.09 to 0.30 of the distance along the surface of the sidewall part from the end part of the tread joint surface, and the side rubber member (A) contains 100 parts by mass of a rubber component comprising at least one or more selected from the group consisting of a natural rubber, a synthetic isoprene rubber, a polybutadiene rubber, and a styrene-butadiene copolymer rubber, and from 40 to 100 parts by mass of carbon black having a nitrogen adsorption specific surface area (N$_2$SA, as measured according to JIS K6217-2:2001) of from 70 to 150 m$^2$/g and

   wherein the tire casing has a side rubber member (B) extending along the surface of the sidewall part from an innermost position in at least a tire radius direction of the side rubber member (A) to a straight line at right angles to a tire center line, the straight line penetrates at least an end part of the carcass ply, and the side rubber member (B) contains 100 parts by mass of a rubber component comprising at least one or more selected from the group consisting of a natural rubber, a synthetic isoprene rubber, and a polybutadiene rubber and from 20 to 80 parts by mass of carbon black having a nitrogen adsorption specific surface area (N$_2$SA, as measured according to JIS K6217-2:2001) of from 25 to 60 m$^2$/g;

[2] The tire casing as set forth above in [1], wherein the side rubber member (B) extends to the end part of the bottom surface of the bead part;

[3] The tire casing as set forth above in any one of [1] to [2], wherein a loss tangent (tan δ) of the side rubber member (B) is from 0.07 to 0.16 [measurement method of loss tangent (tan δ), as measured at a frequency of 52 Hz, an initial strain of 10 %, a measuring temperature of 60°C, and a dynamic strain of 1 % by using a dynamic viscoelasticity analyzer]; and

[4] The tire casing as set forth above in any one of [1] to [3], wherein a thickness of the sidewall rubber member (A) is from 0.5 to 6.5 mm. [Effects of the Invention]

According to the present invention, a tire casing capable of not only enhancing low fuel consumption but enhancing external damage resistance of a shoulder portion of a sidewall part close to a road surface can be provided.

[Brief Description of the Drawings]

[FIG. 1] FIG. 1 is a cross-sectional schematic view showing an example of a tire obtained by sticking a tread member to a tire casing of the present invention and achieving vulcanization.
[FIG. 2] FIG. 2 is a partial cross-sectional schematic view showing an example of a tire casing of the present invention.
[FIG. 3] FIG. 3 is a partial cross-sectional schematic view showing another example of a tire casing of the present invention.

[Modes for Carrying Out the Invention]

The tire casing of the present invention is a tire casing comprising a sidewall part, a bead part, a carcass ply, and a belt part and having been previously vulcanized prior to sticking a tread member, wherein when a distance from an end part of the tread member joint surface to an end part of the bottom surface of the bead part along the surface of the sidewall part is defined to be 1, the tire casing has a side rubber member (A) extending in a proportion of from 0.09 to 0.30 of the distance along the surface of the sidewall part from the end part of the tread j oint surface, and the side rubber member (A) contains 100 parts by mass of a rubber component comprising at least one or more selected from the group consisting of a natural rubber, a synthetic isoprene rubber, a polybutadiene rubber, and a styrene-butadiene copolymer rubber, and from 40 to 100 parts by mass of carbon black having a nitrogen adsorption specific surface area (N$_2$SA, as measured according to JIS K6217-2:2001) of from 70 to 150 m$^2$/g. When the distance along the surface of the sidewall part from the end part of the tread joint surface is less than 0.09, it becomes difficult to enhance the external damage resistance of the shoulder portion close to the road surface, whereas when it exceeds 0.30, the low fuel consumption is lowered.

The tire vulcanization method of a two-stage vulcanization process by using the previously vulcanized tire casing of the present invention, sticking a tread member thereto and further achieving vulcanization is hereinafter often referred to as "two-stage vulcanization". Also, a conventional method of once vulcanizing a green tire is hereinafter often referred to as "one-stage vulcanization".

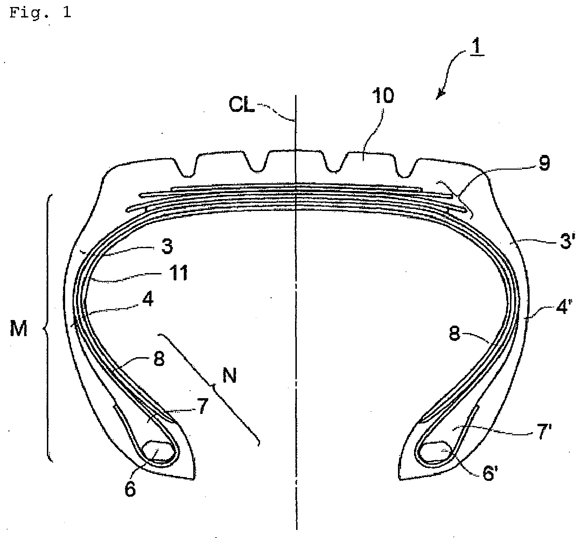

Respective members of a tire obtained using the tire casing of the present invention are hereunder described. FIG. 1 is a cross-sectional schematic view showing an example of a tire obtained using the tire casing of the present invention.

In this example of a tire 1, a belt part 9 composed of plural belt layers is arranged outside the tire radius direction of a carcass ply 8 in which stiffeners 7 and 7' extend outside the tire radius direction from a pair of bead cores 6 and 6', respectively and which is turned up at the bead core 6 from the outside of the stiffener 7, forms a horseshoe-shaped tire case shape, is turned up at the bead core 6' on the opposite side, and is seized outside the stiffener 7'. The tire 1 is equipped with a sidewall part M covering an outer part of the tire 1. The sidewall part M extends from both side parts of a tread part 10 to a straight line at right angles to a tire center line, and may also possibly extend to an end part of the bottom surface of the bead part. The straight line penetrates at least an end part of the carcass ply. The tire 1 is also equipped with a bead part N composed of the bead core 6, the stiffener 7, the turn-up part of the carcass ply 8, and a bead rubber (not shown), etc. ; and further equipped with the belt part 9, the tread part 10, and an inner liner 11 that is a low air-permeable layer.

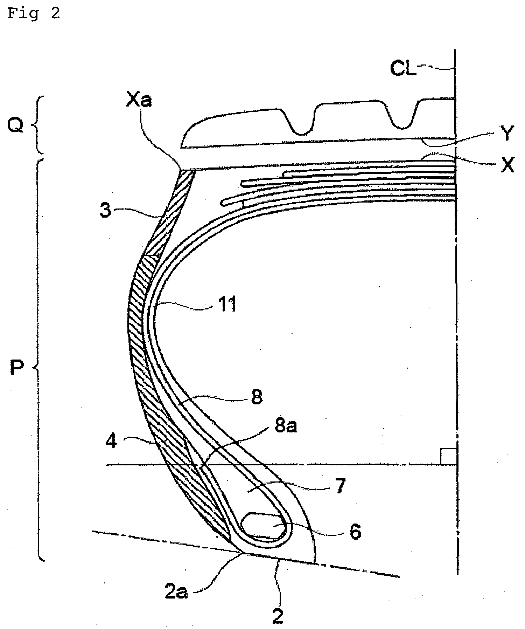

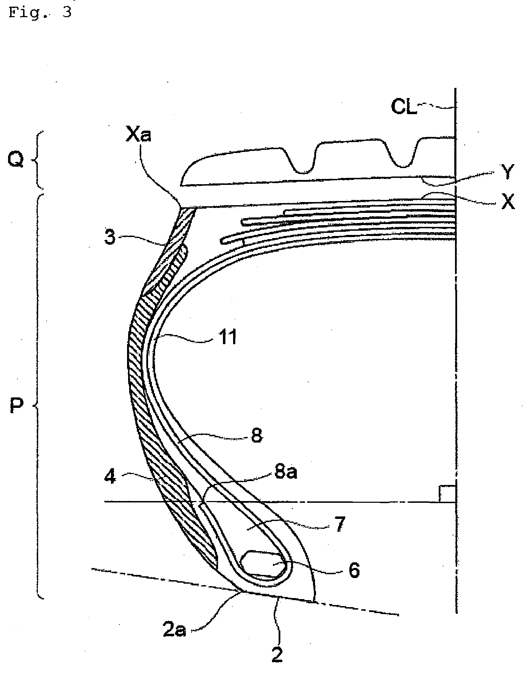

Next, respective members of the tire casing of the present invention are described. FIG. 2 is a partial cross-sectional schematic view showing an example of a tire casing P of the present invention, and FIG. 3 is a partial cross-sectional schematic view showing another example of a tire casing P of the present invention. When a distance from an end part Xa of the tread member joint surface to an end part 2a of the bottom surface of the bead part along the surface of the sidewall part is defined to be 1, a side rubber member (A) 3 which is arranged in a tire casing P of the present invention is characterized by extending in a proportion of from 0.09 to 0.30 of the distance along the surface of the sidewall part from the end part Xa of the tread joint surface.

The tire casing P of the present invention is equipped with the sidewall part M, the bead part N, the carcass ply 8, and the belt part 9 and is previously vulcanized prior to sticking a tread member Q. The tread member Q to be stuck to the tire casing P is one forming the tread part 10 of the tire 1, and it may be composed of an unvulcanized rubber composition, or may be a precured tread member having been preliminarily vulcanized in advance.

It is preferable that the tire casing P of the present invention has a side rubber member (B) 4 extending along the surface of the sidewall part from an innermost position in at least a tire radius direction of the side rubber member (A) 3 to a straight line at right angles to a tire center line CL. The straight line penetrates at least an end part 8a of the carcass ply. It is more preferable that the side rubber member (B) 4 extends to the end part of the bottom surface of the bead part. This is because when a rubber composition with low heat generation properties is applied as the side rubber member (B) 4, the low fuel consumption of the tire casing P is increased.

As shown in FIG. 2, the side rubber member (A) 3 and the side rubber member (B) 4 may be continuously arranged upon being joined at the end parts of the both members; and as shown in FIG. 3, the side rubber member (B) 4 may extend inward the side rubber member (A) 3.

In the present invention, it is preferable that a loss tangent (tan $\delta$) of the side rubber member (B) 4 is from 0.07 to 0.16. So far as the loss tangent is 0.07 or more, the external damage resistance is enhanced, and so far as it is not more than 0.16, the low fuel consumption of the tire casing P can be increased.

Also, in order to enhance the external damage resistance of the shoulder portion of the sidewall part M close to the road surface, it is desirable that hysteresis loss properties are high.

It is preferable that a loss tangent (tan $\delta$) of the side rubber member (A) 3 is from 0.17 to 0.24. It is preferable that a ratio of the loss tangent (tan $\delta$) of the side rubber member (B) 4 and the loss tangent (tan $\delta$) of the side rubber member (A) 3 [{loss tangent of side rubber member (B)}/{loss tangent of side rubber member (A)}] is from 0.2 to 0.8.

Here, the loss tangent (tan $\delta$) is one measured at a frequency of 52 Hz, an initial strain of 10 %, a measuring temperature of 60°C, and a dynamic strain of 1 % by using a dynamic viscoelasticity analyzer (for example, a spectrometer, manufactured by Ueshima Seisakusho Co.; Ltd.).

[Side rubber member (A) 3]

The side rubber member (A) 3 is a member to be arranged for the purpose of enhancing the external damage resistance of the shoulder portion of the sidewall part M close to the road surface and is required to contain 100 parts by mass of a rubber component comprising at least one or more selected from the group consisting of a natural rubber, a synthetic isoprene rubber, a polybutadiene rubber, and a styrene-butadiene copolymer rubber, and from 40 to 100 parts by mass of carbon black having a nitrogen adsorption specific surface area ($N_2SA$, as measured according to JIS K6217-2:2001) of from 70 to 150 $m^2/g$.

When the nitrogen adsorption specific surface area ($N_2SA$) of carbon black is less than 70 $m^2/g$, the external damage resistance is lowered, whereas when it exceeds 150 $m^2/g$, the workability of the unvulcanized rubber composition is lowered.

Also, so far as the compounding amount of carbon black falls within the range of from 40 to 100 parts by mass, both the external damage resistance and the security of workability of the unvulcanized rubber composition can be made compatible with each other.

It is preferable that a thickness of the side rubber member (A) 3 is from 0.5 to 6.5 mm. What the thickness of the side rubber member (A) 3 is 0.5 mm or more is preferable for an enhancement of the external damage resistance, and what it is not more than 6.5 mm is preferable for an enhancement of the low fuel consumption.

(Carbon black)

In the present invention, examples of carbon black having a nitrogen adsorption specific surface area of from 70 to 150 $m^2/g$, which is used for the side rubber member (A) 3, include HAF (nitrogen adsorption specific surface area: from 75 to 80 $m^2/g$), HS-HAF (nitrogen adsorption specific surface area: from 78 to 83 $m^2/g$), LS-HAF (nitrogen adsorption specific surface area: from 80 to 85 $m^2/g$), N339 (nitrogen adsorption specific surface area: from 88 to 96 $m^2/g$), LI-HAF (nitrogen adsorption specific surface area: from 73 to 75 $m^2/g$), HS-IISAF (nitrogen adsorption specific surface area: from 96 to 101 $m^2/g$), LS-ISAF (nitrogen adsorption specific surface area: from 104 to 108 $m^2/g$), ISAF (nitrogen adsorption specific surface area: from 114 to 120 $m^2/g$), and so on. Of these, HAF, HS-HAF, LS-HAF, LI-HAF, and N339 are preferable.

(Silica)

In the present invention, the side rubber member (A) 3 may contain, in addition to carbon black, silica, if desired. It is preferable that the side rubber member (A) 3 contains less than 10 parts by mass of silica based on 100 parts by mass of the rubber component thereof.

Any commercially available materials can be used as silica. Above all, it is preferable to use wet type silica, dry type silica, or colloidal silica, and it is especially preferable to use wet type silica. It is preferable that a BET specific surface area (as measured in conformity with ISO 5794/1) of silica is from 40 to 350 $m^2/g$. Silica whose BET specific surface area falls within this range has such an advantage that both rubber reinforcing properties and dispersibility into the rubber component can be made compatible with each other. From this viewpoint, silica whose BET specific surface area falls within the range of from 80 to 350 $m^2/g$ is more preferable, and silica whose BET specific surface area falls within the range of from 120 to 350 $m^2/g$ is especially preferable. As such silica, commercially available materials such as trade names "Nipsil AQ" (BET specific surface area = 220 $m^2/g$) and "Nipsil KQ", all of which are manufactured by Tosoh Silica Corporation; a trade name "Ultrasil VN3" (BET specific surface area = 175 $m^2/g$), manufactured by Degussa; and so on can be used.

(Rubber component)

In the present invention, at least one or more diene based rubbers selected from the group consisting of a natural rubber, a synthetic isoprene rubber, a polybutadiene rubber, and a styrene-butadiene copolymer rubber are used as the rubber component which is used for the side rubber member (A) 3.

Of these, at least one or more diene based rubbers selected from a natural rubber, a synthetic isoprene rubber, and a polybutadiene rubber are preferable.

[Side rubber member (B) 4]

The side rubber member (B) 4 is a member to be arranged for the purpose of enhancing the low fuel consumption of the tire casing P and contains 100 parts by mass of a rubber component comprising at least one or more selected from the group consisting of a natural rubber, a synthetic isoprene rubber, and a polybutadiene rubber and from 20 to 80 parts by mass of carbon black having a nitrogen adsorption specific surface area ($N_2SA$, as measured according to JIS K6217-2:2001) of from 25 to 60 $m^2/g$.

So far as the nitrogen adsorption specific surface area ($N_2SA$) of carbon black is 25 $m^2/g$ or more, fracture resistance properties as an outer wall of the sidewall part are secured, and so far as it is not more than 60 $m^2/g$, excellent low heat generation properties are obtained, and the low fuel consumption of the tire casing P is enhanced.

Also, from the viewpoint of making both an enhancement of the low heat generation properties and the rupture resistance properties compatible with each other, the compounding amount of carbon black is preferably in the range of from 20 to 80 parts by mass, more preferably in the range of from 20 to 60 parts by mass, and still more preferably in the range of from 30 to 60 parts by mass.

(Carbon black)

In the present invention, examples of carbon black having a nitrogen adsorption specific surface area of from 25 to 60 $m^2/g$, which is used for the side rubber member (B) 4, include FEF (nitrogen adsorption specific surface area: from 39 to 46 $m^2/g$), MAF (nitrogen adsorption specific surface area: from 46 to 50 $m^2/g$), HS-MAF (nitrogen adsorption specific surface area: from 54 to 58 $m^2/g$), GPF (nitrogen adsorption specific surface area: from 26 to 28 $m^2/g$), SRF (nitrogen adsorption specific surface area: from 25 to 28 $m^2/g$), and so on. Of these, FEF, GPF, and MAF are preferable.

(Silica)

In the present invention, similar to the side rubber member (A) 3, the side rubber member (B) 4 may contain, in addition to carbon black, silica, if desired. It is preferable that the side rubber member (B) 4 contains less than 10 parts by mass of silica based on 100 parts by mass of the rubber component thereof.

The same materials as those which are useful for the side rubber member (A) 3 are useful as silica.

(Rubber component)

In the present invention, from the viewpoint of enhancing the low fuel consumption, at least one or more diene based rubbers selected from a natural rubber, a synthetic isoprene rubber, and a polybutadiene rubber are preferable as the rubber component which is used for the side rubber member (B) 4.

(Other compounding agents)

To the side rubber member (A) 3 and the side rubber member (B) 4 in the present invention, in addition to the foregoing rubber component, carbon black and silica, other compounding agents, for example, a vulcanizing agent such as sulfur, etc.; a vulcanization activator such as zinc flower, an organic acid (e.g., stearic acid, etc.), etc.; a vulcanization accelerator; an inorganic filler other than silica; an anti-aging agent; an antiozonant; a softener; and the like can be added.
As a kneader which is used for the manufacture of the side rubber member (A) 3 and the side rubber member (B) 4 according to the present invention, a Banbury mixer, a roll, an intensive mixer, and the like are useful.
In the present invention, in the case of manufacturing the tire casing P upon vulcanization, first of all, an unvulcanized case part is molded. The case part is molded in the same way as that in a molding step of a green tire in a known tire manufacturing method and is equipped with the sidewall part M, the bead part N, the carcass ply, and the belt part. For example, a carcass ply having been rubber coated with an unvulcanized rubber is wound around a building drum; a bead core is set in both end parts of the carcass ply; the both end parts of the carcass ply are then turned up; and an unvulcanized rubber of the sidewall part M is further stuck thereonto. Subsequently, a central part in a width direction thereof is expanded in diameter into an annular form of a cross-sectional horseshoe shape; an unvulcanized belt layer is then provided on an outer periphery of the carcass layer; and a thin layer of a rubber composition preferably the same as that of the inner layer of the tread part 10 is stuck thereonto, whereby the case part can be obtained.
By setting the foregoing case part in a vulcanization mold tool (mold) and achieving vulcanization molding, the tire casing P having a part of the tread part 10 or not having the tread part 11 at all can be obtained.
On the other hand, in the case of using a precured tread member as the tread member Q, the tread member Q in an annular shape may be, for example, obtained by extruding a tread raw material composed of an unvulcanized rubber, whose cross section in a width direction is substantially trapezoidal, from an extruder (not shown), and cutting into a prescribed length, and then setting the cut stripe-shaped tread raw material in, for example, a vulcanization mold tool equipped with an upper mold and a lower mold to achieve vulcanization. At that time, plural grooves extending in a longitudinal direction of the annular outer surface of the tread member Q are formed.
In the above-obtained tire casing P and tread member Q (in particular, the precured tread member), since the tire casing surface which has come into contact with the mold surface during the vulcanization has such properties that it is hardly co-crosslinked with the unvulcanized rubber, in order to remove (shave off) a surface layer rubber on each of a tread member joint surface X of the tire casing P working as an adhesive surface between the tire casing P and the tread member Q and a tire casing joint surface Y of the tread member for the purpose of securing the adhesiveness, it is preferable that the joint surface X and the joint surface Y are previously abraded by a buffing machine.
Subsequently, the tire casing P and the tread member Q are allowed to adhere to each other and subjected to integral vulcanization molding to obtain the tire 1. At that time, it is preferable that the tire casing P and the tread member Q are allowed to adhere to each other via an unvulcanized adhesive rubber layer and subjected to vulcanization molding. The unvulcanized adhesive rubber layer may be a usual adhesive rubber in a sheet form, or may be formed by coating a liquid rubber on the adhesive surface.
Subsequently, the tire casing P having the tread member Q stuck thereonto is sent in a non-illustrated vulcanization apparatus (for example, a vulcanizing pan), and the unvulcanized adhesive rubber layer is vulcanized to form the tire 1. At that time, the tread member Q is subjected to covulcanization and adhesion to the outer periphery of a crown part of the tire casing P.

[Examples]

The present invention is hereunder described in more detail by reference to the following Examples, but it should not be construed that the present invention is limited to these Examples.
Incidentally, the loss tangent (tan $\delta$), low fuel consumption and external damage resistance were evaluated in the following methods.

<Loss tangent (tan $\delta$)>

A rubber specimen having been vulcanized at 145°C for 30 minutes was used and measured at a frequency of 52 Hz, an initial strain of 10 %, a measuring temperature of 60°C, and a dynamic strain of 1 % by using a dynamic viscoelasticity analyzer (a spectrometer, manufactured by Ueshima Seisakusho Co., Ltd.).

<Low fuel consumption>

Each experimental tire was allowed to run at 80 km/hr by means of a drum test and measured for a resistance generated on the tire contact area to a travelling direction, and the low fuel consumption was expressed as an index according to the following expression while defining a value of Comparative Example 1 to be 100. The larger this value, the smaller the rolling resistance is, and such is favorable.

$$\text{Low fuel consumption index} = \{(\text{Rolling resistance of tire of}$$

$$\text{Comparative Example 1})/(\text{Rolling resistance of test tire})\} \times 100$$

<External damage resistance>

After allowing each experimental tire to run on a general road for 70, 000 km by a real car, a number of cracks penetrating from an outermost surface in a sidewall tire width direction to an interface with the innermost tire internal member in the width direction at a position of from 0.09 to 0.30 of the distance along the surface of the sidewall part from the end part of the tread joint surface was measured, and a reciprocal of the number of cracks was expressed as an index while defining a value of Comparative Example 1 to be 100. It is meant that the larger the numerical value, the more favorable the external damage resistance.

$$\text{External damage resistance index} = \{(\text{Number of cracks of tire of}$$

$$\text{Comparative Example 1})/(\text{Number of cracks of test tire})\} \times 100$$

Examples 1 to 4 and Comparative Examples 1 to 2

Two kinds of the side rubber member (A) and two kinds of the side rubber member (B) to be used for Examples 1 to 4 (Examples 3 and 4 are included by way of reference) and Comparative Examples 1 to 2 were manufactured in the usual way according to compounding formulations of the side rubber member (A) and the side rubber member (B) shown in Tables 1 and 2.

A rubber specimen obtained by vulcanizing each of these four kinds of rubber compositions at 145°C for 30 minutes was used and evaluated for the loss tangent (tan $\delta$) according to the foregoing method. The evaluation results are shown in Table 3.

Subsequently, six kinds of unvulcanized case parts of Examples 1 to 4 and Comparative Examples 1 to 2 shown in Table 3 were prepared while making the tire size common as 11R22.5. Each of these case parts was vulcanized by a method of surrounding the case part from the outside by a vulcanizing mold tool and pressurizing and heating it from the inside by a vulcanizing bladder (pressurizing with a high-pressure water vapor at 150°C), thereby manufacturing six kinds of tire casings. At that time, a first heating means of a vulcanizing mold tool block corresponding to a bead part side of the case part was kept at 170°C, and a second heating means of a vulcanizing mold tool block corresponding to a belt part side of the case part was kept at 140°C. Vulcanization times were all 30 minutes.

Also, a tread member obtained by vulcanization molding upon heating at 160°C so as to previously form a tread pattern was separately prepared.

Subsequently, the adhesive surface between each of these six kinds of tire casings and the tread member was abraded by a buffing machine; thereafter, an adhesive rubber for allowing the tire casing and the tread member to adhere to each other was manufactured according to the following compounding contents; and this unvulcanized adhesive rubber sheet was stuck onto the adhesive surface of each of the tire casings.

<Compounding contents of adhesive rubber>

Natural rubber: 100 parts by mass, carbon black HAF (a trade name: Asahi #70, manufactured by Asahi Carbon Co., Ltd.): 35 parts by mass, spindle oil: 10 parts by mass, anti-aging agent 6PPD (a trade name: Nocrac 6C, manufactured by Ouchi Chemical Industrial Co., Ltd.): 2 pats by mass, zinc flower: 5 parts by mass, stearic acid: 3 parts by mass, vulcanization accelerator TBzTD (a trade name: Sanceler TBZTD, manufactured by Sanshin Chemical Industry Co., Ltd.): 0.2 parts by mass, vulcanization accelerator NS (a trade name: Sanceler NS, manufactured by Sanshin Chemical Industry Co., Ltd.): 0.8 parts by mass, vulcanization accelerator M (a trade name: Nocceler M-P, manufactured by Ouchi Chemical Industrial Co., Ltd.): 0.5 parts by mass, sulfur: 3 parts by mass

Subsequently, each of the tread members was stuck onto each of the tire casings, and vulcanization was achieved at 120°C for 2 hours by a vulcanization apparatus, thereby obtaining each tire having the tire casing and the tread member adhered to each other.

The above-obtained six kinds of tires (tire size: 11R22.5) were used and evaluated for the low fuel consumption and external damage resistance according to the foregoing method. The evaluation results are shown in Table 3.

Table 1

| Compounding recipes of side rubber member (A) (parts by mass) | a | b |
|---|---|---|
| Natural rubber | 50 | 40 |
| Polybutadiene rubber *1 | 50 | 60 |
| Carbon black HAF *2 | 50 | - |
| Carbon black FEF *3 | - | 50 |
| Naphthenic oil *4 | 3 | 3 |
| Anti-aging agent 6PPD *5 | 2 | 2 |
| Zinc flower | 3 | 5 |
| Stearic acid | 2 | 2 |
| Vulcanization accelerator CZ *6 | 1 | 1 |
| Sulfur | 1 | 1 |

Table 2

| Compounding recipes of side rubber member (B) (parts by mass) | c | d |
|---|---|---|
| Natural rubber | 40 | 40 |
| Polybutadiene rubber *1 | 60 | 60 |
| Carbon black HAF *2 | - | 40 |
| Carbon black FEF *3 | 40 | - |
| Naphthenic oil *4 | 3 | 3 |
| Anti-aging agent 6PPD *5 | 2 | 2 |
| Zinc flower | 3 | 5 |
| Stearic acid | 2 | 2 |
| Vulcanization accelerator CZ *6 | 1 | 1 |
| Sulfur | 1 | 1 |

[Note of Tables 1 and 2]
*1: A trade name: BR01, manufactured by JSR Corporation
*2: HAF (N-330), a trade name: Asahi #70 (nitrogen adsorption specific surface area: 77 m$^2$/g), manufactured by Asahi Carbon Co., Ltd.
*3: FEF (N-550), a trade name: Asahi #60 (nitrogen adsorption specific surface area: 40 m$^2$/g), manufactured by Asahi Carbon Co., Ltd.
*4: A trade name: A/O MIX, manufactured by Sankyo Yuka Kogyo K.K.
*5: N-(1,3-Dimethylbutyl)-N'-phenyl-p-phenylenediamine, a trade name: Nocrac 6C, manufactured by Ouchi Chemical Industrial Co., Ltd.
*6: N-Cyclohexyl-2-benzothiazolyl sulfenamide, a trade name: Nocceler CZ, manufactured by Ouchi Chemical Industrial Co., Ltd.

Table 3

| Contents of tire | | Example | | | | Comparative Example | |
|---|---|---|---|---|---|---|---|
| | | 1 | 2 | 3* | 4* | 1 | 2 |
| Kind of side rubber member (A) | | a | a | a | a | b | b |
| Loss tangent (tan δ) of side rubber member (A) | | 0.20 | 0.20 | 0.20 | 0.20 | 0.15 | 0.15 |
| Kind of side rubber member (B) | | C | C | d | d | C | d |
| Loss tangent (tan δ) of side rubber member (B) | | 0.13 | 0.13 | 0.18 | 0.18 | 0.13 | 0.18 |
| Disposition of side rubber member (A) and side rubber member (B) | | FIG. 2 | FIG. 3 | FIG. 2 | FIG. 3 | FIG. 2 | FIG. 2 |
| Evaluation results: | Low fuel consumption index | 104 | 104 | 99 | 99 | 102 | 100 |
| | External damage resistance index | 120 | 125 | 120 | 125 | 100 | 100 |
| * included by way of reference | | | | | | | |

As is clear from Table 3, all of the respective tire casings of Examples 1 to 4 were excellent in the low fuel consumption and external damage resistance as compared with the tire casings of Comparative Examples 1 to 2.

[Industrial Applicability]

The tire casing of the present invention is enhanced in the low fuel consumption and is excellent in the external damage resistance of the shoulder portion of the sidewall part close to the road surface, and therefore, it is suitably used as a tire casing for various pneumatic tires, in particular, pneumatic radial tires for small-sized trucks and large-sized vehicles (e.g., for trucks and busses, construction vehicles, etc.).

[Explanations of Letters or Numerals]

1:     Tire
2:     Bottom surface of bead part
2a:    End part of bottom surface of bead part
3:     Side rubber member (A)
4:     Side rubber member (B)
6:     Bead core
7:     Stiffener
8:     Carcass ply
8a:    End part of carcass ply
9:     Belt part
10:    Tread part
11:    Inner liner
M:     Sidewall part
N:     Bead part
P:     tire casing
Q:     Tread member
X:     Tread member joint surface of tire casing
Xa:    End part of tread member joint surface of tire casing
Y:     tire casing joint surface of tread member
CL:    Tire center line

**Claims**

1.  A tire casing comprising a sidewall part, a bead part, a carcass ply, and a belt part and having been previously vulcanized prior to sticking a tread member, wherein when a distance from an end part of the tread member joint surface to an end part of the bottom surface of the bead part along the surface of the sidewall part is defined to be 1, the tire casing has a side rubber member (A) extending in a proportion of from 0.09 to 0.30 of the distance along the surface of the sidewall part from the end part of the tread joint surface, and the side rubber member (A) contains 100 parts by mass of a rubber component comprising at least one or more selected from the group consisting of a natural rubber, a synthetic isoprene rubber, a polybutadiene rubber, and a styrene-butadiene copolymer rubber, and from 40 to 100 parts by mass of carbon black having a nitrogen adsorption specific surface area ($N_2SA$, as measured according to JIS K6217-2:2001) of from 70 to 150 $m^2$/g, and
    wherein the tire casing has a side rubber member (B) extending along the surface of the sidewall part from an innermost position in at least a tire radius direction of the side rubber member (A) to a straight line at right angles to a tire center line, the straight line penetrates at least an end part of the carcass ply, and the side rubber member (B) contains 100 parts by mass of a rubber component comprising at least one or more selected from the group consisting of a natural rubber, a synthetic isoprene rubber, and a polybutadiene rubber and from 20 to 80 parts by mass of carbon black having a nitrogen adsorption specific surface area ($N_2SA$, as measured according to JIS K6217-2:2001) of from 25 to 60 $m^2$/g.

2.  The tire casing according to claim 1, wherein the side rubber member (B) extends to the end part of the bottom surface of the bead part

3.  The tire casing according to claim 1 or 2, wherein a loss tangent (tan $\delta$) of the side rubber member (B) is from 0.07 to 0.16 [measurement method of loss tangent (tan $\delta$), as measured at a frequency of 52 Hz, an initial strain of 10%, a measuring temperature of 60°C, and a dynamic strain of 1 % by using a dynamic viscoelasticity analyzer].

4.  The tire casing according to any one of claims 1 to 3, wherein a thickness of the side rubber member (A) is from 0.5 to 6.5 mm.

**Patentansprüche**

1.  Reifenhülle, die ein Seitenwandteil, ein Wulstteil, eine Karkassenlage und ein Gürtelteil aufweist und vor dem Haften eines Laufflächenelementes vorher vulkanisiert wurde, wobei, wenn ein Abstand von einem Endteil der Verbindungsfläche des Laufflächenelementes zu einem Endteil der unteren Fläche des Wulstteils längs der Fläche des Seitenwandteils als 1 definiert wird, die Reifenhülle ein Seitengummielement (A) aufweist, das sich in einem Verhältnis von 0,09 bis 0,30 des Abstandes längs der Fläche des Seitenwandteils vom Endteil der Verbindungsfläche der Lauffläche erstreckt, und wobei das Seitengummielement (A) 100 Masseteile einer Gummikomponente enthält, die mindestens eine oder mehrere aufweist, die aus der Gruppe ausgewählt werden, die besteht aus: einem Naturkautschuk; einem synthetischen Isoprenkautschuk; einem Polybutadienkautschuk; und einem Styrol-Butadien-Copolymerkautschuk, und die von 40 bis 100 Masseteile Ruß mit einer spezifischen Oberfläche der Stickstoffadsorption ($N_2SA$, gemessen nach JIS K6217-2:2001) von 70 bis 150 $m^2$/g aufweist, und
    wobei die Reifenhülle ein Seitengummielement (B) aufweist, das sich entlang der Fläche des Seitenwandteils von einer innersten Position aus in mindestens einer Reifenradiusrichtung des Seitengummielementes (A) bis zu einer geraden Linie unter rechtem Winkel zu einer Reifenmittellinie erstreckt, wobei die gerade Linie mindestens ein Endteil der Karkassenlage durchdringt, und wobei das Seitengummielement (B) 100 Masseteile einer Gummikomponente enthält, die mindestens eine oder mehrere aufweist, die aus der Gruppe ausgewählt werden, die besteht aus: einem Naturkautschuk; einem synthetischen Isoprenkautschuk; und einem Polybutadienkautschuk, und die von 20 bis 80 Masseteile Ruß mit einer spezifischen Oberfläche der Stickstoffadsorption ($N_2SA$, gemessen nach JIS K6217-2:2001) von 25 bis 60 $m^2$/g aufweist.

2.  Reifenhülle nach Anspruch 1, bei der sich das Seitengummielement (B) zum Endteil der unteren Fläche des Wulstteils erstreckt.

3.  Reifenhülle nach Anspruch 1 oder 2, bei der eine Verlusttangente (tan $\delta$) des Seitengummielementes (B) von 0,07 bis 0,16 beträgt [Messverfahren der Verlusttangente (tan $\delta$) gemessen bei einer Frequenz von 52 Hz, einer anfänglichen Dehnung von 10 %, einer Messtemperatur von 60 °C und einer dynamischen Dehnung von 1 % bei Anwendung eines Analysators für die dynamische Viskoelastizität].

**4.** Reifenhülle nach einem der Ansprüche 1 bis 3, bei der eine Dicke des Seitengummielementes (A) von 0,5 bis 6,5 mm beträgt.

**Revendications**

**1.** Carcasse de bandage pneumatique, comprenant une partie de flanc, une partie de talon, une nappe de carcasse et une partie de ceinture, et ayant été vulcanisé, avant le collage d'un élément de bande de roulement, dans laquelle, si une distance entre une partie d'extrémité de la surface de liaison de l'élément de bande de roulement et une partie d'extrémité de la surface inférieure de la partie de talon, le long de la surface de la partie de flanc, est définie comme correspondant à 1, la carcasse du bandage pneumatique comporte un élément de gomme de flanc (A) s'étendant dans une proportion représentant 0,09 à 0,30 de la distance, le long de la surface de la partie de flanc, à partir de la partie d'extrémité de la surface de liaison de la bande de roulement, l'élément de gomme de flanc (A) contenant 100 parties en poids d'un composant de caoutchouc comprenant au moins un ou plusieurs types de caoutchouc sélectionnés dans le groupe constitué d'un caoutchouc naturel, d'un caoutchouc isoprène synthétique, d'un caoutchouc de polybutadiène, d'un caoutchouc de copolymère de styrène-butadiène, et entre 40 et 100 parties en poids de noir de carbone, comportant une aire de surface spécifique à adsorption d'azote ($N_2$ SA, mesurée selon JIS K6217-2: 2001) comprise entre 70 et 150 $m^2$/g ; et

dans laquelle la carcasse du bandage pneumatique comporte un élément de gomme de flanc (B) s'étendant le long de la surface de la partie de flanc, d'une position interne extrême dans au moins une direction radiale du bandage pneumatique de l'élément de gomme de flanc (A) vers une ligne droite à angle droit par rapport à une ligne médiane du bandage pneumatique, la ligne droite pénétrant au moins dans une partie d'extrémité de la nappe de carcasse, et l'élément de gomme de flanc (B) contenant 100 parties en poids d'un composant de caoutchouc, comprenant au moins un ou plusieurs types de caoutchouc sélectionnés dans le groupe constitué d'un caoutchouc naturel, d'un caoutchouc isoprène synthétique, et d'un caoutchouc de polybutadiène, et 20 à 80 parties en poids de noir de carbone comportant une aire de surface spécifique à adsorption d'azote ($N_2$ SA, mesurée selon JIS K6217-2 : 2001) comprise entre 25 et 60 $m^2$/g.

**2.** Carcasse de bandage pneumatique selon la revendication 1, dans laquelle l'élément de gomme de flanc (B) s'étend vers la partie d'extrémité de la surface inférieure de la partie de talon.

**3.** Carcasse de bandage pneumatique selon les revendications 1 ou 2, dans laquelle une tangente de l'angle de pertes (tan $\delta$) de l'élément de gomme de flanc (B) est comprise entre 0,07 et 0,16 [procédé de mesure de la tangente d'angle de pertes (tan $\delta$), mesurée en présence d'une fréquence de 52 Hz, avec une contrainte initiale de 10% ; une température de mesure de 60°C, et une contrainte dynamique de 1% en utilisant un analyseur de la viscoélasticité dynamique].

**4.** Carcasse de bandage pneumatique selon l'une quelconque des revendications 1 à 3, dans laquelle une épaisseur de l'élément de gomme de flanc (A) est comprise entre 0,5 et 6,5 mm.

Fig. 1

Fig 2

Fig. 3

**REFERENCES CITED IN THE DESCRIPTION**

**Patent documents cited in the description**

- JP 2007331422 B
- JP 2006111072 B
- JP 2005350595 A
- JP 2008291084 A
- JP 2009119994 A
- JP 8258179 A
- JP 2000079640 A
- JP 2006111072 A